# EUROPEAN PATENT APPLICATION

(11) **EP 4 535 102 A1**
(43) Date of publication of application: **09.04.2025**
(21) Application number: 24177452.0
(22) Date of filing: 22.05.2024
(51) Int. Cl.: G05B 19/4093, G05B 19/4099, B23C 3/18

(54) **SYSTEMS, DEVICES, AND METHODS FOR FLANK MILLING VIA DETERMINED FLATTEST LINES**

(30) Priority: 02.10.2023 US 202318375909
(71) Applicant: Hexagon Technology Center GmbH, 9435 Heerbrugg (CH)
(72) Inventor: SONA, Giuliano, 59016 Poggio a Caiano (IT); PETRUZZI, Simone, 51037 Montale (IT)
(74) Representative: Kaminski Harmann

(57) **Abstract**

Methods, systems, and devices for flank milling by a computer numerical control (CNC) machine by selecting a workpiece to be machined, determining a tool path for the flank milling cutting tool based on a selected flank milling cutting tool having a tool curvature matching the curvature of an identified subset of curves, where the identified subset of curves may have near-zero curvature and determined to have a direction minimizing an absolute value of a normal curvature, and where the subset of curves may be on an unruled surface and having pseudo-ruledness properties.

## Description

### TECHNICAL FIELD

The present invention relates generally to the field of computer-aided manufacturing (CAM) methods, and more particularly to a method for optimal flank milling of non-ruled surfaces.

### BACKGROUND

In the field of CAM-subtractive flank milling, the target surface is typically required to be a ruled surface, i.e., be representable as the set of points swept by a moving straight line. This condition provides high-level finishing quality and allows faster material-removing rates, especially in 5-axes cycles. However, CAD models may not always guarantee that target surfaces, such as splitters, blades, and generic subparts of impellers, are ruled. This limitation presents a challenge for the CAM-user when machining such surfaces, as no direct application of 5-axes flank-milling cycles is possible. Typical methods may not be suitable because they are limited in their ability to achieve tight, mathematically rigorous, tool-target surface contact, especially for surfaces that are not ruled. Additionally, flank milling, involving the 5-axis alignment of the cutting tool with the rulings of the target ruled surface is possible under certain conditions, notably that surfaces are indeed ruled, which is often not the case when aerodynamic profiles are required. Accordingly, a need exists to use surface characteristics that can help to better axis-align a 5-axes barrel shaped cutting-tool with the target surface.

### SUMMARY

A method embodiment may include: selecting a workpiece to be machined, where the workpiece has a set of one or more unruled surfaces; determining sub-areas of the set of one or more unruled surfaces having a set of curves where the set of curves have pseudo-ruledness properties, where pseudo-ruledness properties may be a set of properties associated with the surface and determined based on evaluating the Gaussian curvature of the set of curves and a set of criteria; determining a direction for each curve of the set of curves of the determined sub-areas, where the direction minimizes an absolute value of a normal curvature for the set of curves and correspond to isolines on the determined sub-areas that exhibit near-zero curvature; identifying a subset of curves having near-zero curvature from the set of curves determined to have direction minimizing an absolute value of a normal curvature, the identifying based on whether the determined direction may be negative, zero, or positive within a threshold; selecting a flank milling cutting tool from a set of available tools based on matching the curvature of the identified subset of curves with curvature of the flank milling cutting tool; and determining a tool path for the flank milling cutting tool based on the selected flank milling cutting tool having a tool curvature and the curvature of the identified subset of curves.

In additional method embodiments, the set of criteria may be based on identifying the sub-areas to be at least one of: surface that may be not exact-ruled and surface that may be not far from being a ruled surface. Additional method embodiments may further include: inspecting the set of one or more unruled surfaces for pseudo-ruledness properties. Additional method embodiments may further include: validating the determined tool path for the flank milling cutting tool to ensure that the tool path may be free of collisions and tolerance-exceeding interferences with the surface.

In additional method embodiments, the direction may be slightly varying point by point and determined via stepping in the calculated directions, where at each step the curvature may be again examined to be at least one of: non-positive and positive not exceeding a prescribed positive physical threshold. In additional method embodiments, the threshold may be based on a machining tolerance, where the tolerance may be based on machining capabilities of the machine where the machine may be not capable of flank milling past the threshold. In additional method embodiments, threshold may be adjusted based on a flank milling stage, where the stage may be at least one of: during roughing, semi-finishing, and finishing stages.

In additional method embodiments, matching the curvature of the identified subset of curves with curvature of the flank milling cutting tool ensures that the selected tool efficiently machines the surface while minimizing deviations from the desired curvature profile.

Additional method embodiments may further include: outputting the determined tool path for the flank milling cutting tool as one or more machine instructions. In additional method embodiments, determining a tool path for the flank milling cutting tool may be further based on following the near-zero curvature isolines.

Device embodiments may include a device for generating instructions for a five-axis machining tool, the device having a processor and addressable memory, the processor configured to: select a workpiece to be machined, where the workpiece has a set of one or more unruled surfaces; determine sub-areas of the set of one or more unruled surfaces having a set of curves where the set of curves have pseudo-ruledness properties, where pseudo-ruledness properties may be a set of properties associated with the surface and determined based on an evaluation of the Gaussian curvature of the set of curves and a set of criteria; determine a direction for each curve of the set of curves of the determined sub-areas, where the direction minimizes an absolute value of a normal curvature for the set of curves and correspond to isolines on the determined sub-areas that exhibit near-zero curvature; identify a subset of curves having near-zero curvature from the set of curves determined to have direction that minimizes an absolute value of a normal curvature, and configured to identify based on whether the determined direction may be negative, zero, or positive within a threshold; select a flank milling cutting tool from a set of available tools based on matching the curvature of the identified subset of curves with curvature of the flank milling cutting tool; and determine a tool path for the flank milling cutting tool based on the selected flank milling cutting tool having a tool curvature and the curvature of the identified subset of curves.

In additional device embodiments, the threshold may be based on a machining tolerance, where the tolerance may be based on machining capabilities of the machine where the machine may be not capable of flank milling past the threshold. In additional device embodiments, matching the curvature of the identified subset of curves with curvature of the flank milling cutting tool ensures that the selected tool efficiently machines the surface while minimizing deviations from the desired curvature profile.

In additional device embodiments, the processor may be further configured to: validate the determined tool path for the flank milling cutting tool to ensure that the tool path may be free of collisions and tolerance-exceeding interferences with the surface. In additional device embodiments, the flank milling cutting tool may be a barrel cutting tool.

### BRIEF DESCRIPTION OF THE DRAWINGS

The components in the figures are not necessarily to scale, emphasis instead being placed upon illustrating the principals of the invention. Like reference numerals designate corresponding parts throughout the different views. Embodiments are illustrated by way of example and not limitation in the figures of the accompanying drawings, in which:
FIG. 1 depicts a flow diagram to determine pseudo-ruledness;
FIG. 2 depicts a flow diagram to identify near-zero-curvature isolines;
FIG. 3 depicts a flow diagram to evaluate near-zero-curvature isolines;
FIG. 4 depicts a flow diagram to determine a matching tool for machining the surface;
FIG. 5 depicts a flow diagram to calculate flank milling tool path;
FIG. 6 depicts a flowchart of a method of determining a machining tool path;
FIG. 7 depicts a flowchart of the implementation of the flattest line method;
FIG. 8 depicts in a top-level flowchart, an exemplary method of the disclosed embodiments;
FIG. 9 depicts a top-level functional block diagram of a computing device system in a computer aided manufacturing (CAM) environment;
FIG. 10 depicts a graphical representation of the surface flattest lines CAD/CAM method;
FIG. 11 illustrates the flattest lines CAD/CAM method with a focus on the generalization of the concept of asymptotic lines;
FIGS. 12A-12B depict the concept and utility of the flattest lines CAD/CAM method for nearly ruled surfaces;
FIG. 13 depicts the use of circular arc fitting for determining the suitability of a target surface for flank milling by cutting tools with curved flanks;
FIG. 14 depicts an image further illustrating the application of flank milling on a target surface using a barrel tool with a curved flank;
FIGS. 15A-15C depict a series of images demonstrating the results obtained by applying the flattest lines calculation method to certain surfaces which are not exactly ruled surfaces;
FIGS. 16A-16B depict the same surface as shown previously in FIG. 15 showing different shading relation between the family of the flattest lines and the surface they are extracted from;
FIG. 17 shows a high-level block diagram and process of a computing system for implementing an embodiment of the system and process;
FIG. 18 shows a block diagram and process of an exemplary system in which an embodiment may be implemented; and
FIG. 19 depicts a cloud computing environment for implementing an embodiment of the system and process disclosed herein.

### DETAILED DESCRIPTION

Computer-Aided Design (CAD) systems may generate surfaces for various components, such as the blades of the impeller, where ruled surfaces may be critical for efficient flank milling operations. In the context of flank milling, the target surface is ideally a ruled surface, which can be described as a set of points swept by a moving straight line. One aspect is that the cutting tool axis in a milling operation is typically aligned with the ruling of the target surface, leading to more efficient and precise cutting.

In flank milling cycles, the lateral surface of the cylindrical- or conical-shaped tool engages the material, and material removal occurs along the surface of the tool, rather than at its tip. This is in contrast to point milling cycles, where the tool's tip is primarily responsible for material removal. The disclosed embodiments and corresponding figures serve to illustrate the concept of flank milling, emphasizing how the Flattest Lines method may be utilized in conjunction with such tools to optimize flank milling operations on surfaces with varying curvature characteristics.

The disclosed embodiments provide systems, devices, and methods for flank milling via determined flattest lines for tool path trajectory planning in a computer-aided manufacturing (CAM) environment, specifically, computer-assisted milling. Flank milling may be more productive in that it allows larger removal rates of rough material, and it exploits more effectively the cutting sub-area of the cutting tool. Generally, the tool-engagement may be split into a radial component, corresponding to tip point milling, and an axial component, corresponding to flank milling. The increased flexibility of the cutting tool positions in flank milling may result in shorter machining times and/or the rough material being removed in a way to reproduce the desired target shape more precisely and consistently.

The disclosed embodiments provide systems and methods for flank milling of a workpiece to be machined, where the workpiece has a set of one or more surfaces, for example, twisted surfaces, where the surfaces have a Gaussian curvature that varies in both parametric directions and is hence intuitively associated to distortion and to a complex law of variation of the curvature. Also, the set of one or more surfaces do not have the property where through every point in the surface, there is at least one straight line which also lies in the surface. Accordingly, via the disclosed embodiments, flank-milling using determined flattest lines may be used to machine specific parts (typically blades and impeller's sub pieces) having target surfaces representing the parts that are not exact ruled surfaces from a mathematical point of view.

Additionally, in order to allow machinability of surfaces that are not exact ruled in a smooth way, the disclosed embodiments of the flattest lines method measure the distance of the target surface from exact ruledness, as the curves minimizing the absolute value of the normal curvature, by way of combining the concepts of curvature line and asymptotic line. In the differential geometry of surfaces, an asymptotic line of a surface is a curve lying on the surface and tangent to an asymptotic direction (that is, a direction on the surface where the normal curvature is zero) and where curvature lines are curves lying on the surface which are tangent to a principal direction (that is, directions where the normal curvature takes a maximum or a minimum). As will be described in relation to flank milling a part, the curvature of a curve is the degree to which a curve deviates from a straight line, and the curvature of a surface is the degree to which a curved surface deviates from a plane. Accordingly, the machine may perform machining a part by way of flank milling the target surface along those determined flattest lines by means of flank-curved cutting tools (also known as barrel-type tools).

Accordingly, the disclosed systems and methods may determine a set of flattest lines lying on the non-ruled surface, algorithmically produced by exploiting iterative minimization of the absolute value of the normal curvature. That is, the determined set of flattest lines may then act as the equivalent of the rulings in a true ruled surface, and hence represent the mathematical representation closest to a ruled surface that may be found on that specific non-ruled surface. Accordingly, the system may use surface characteristics to better align a barrel shaped tool with the surface involving differential matching between the mild curvature of a barrel (circle-segment) tool and the near-zero curvature lines extracted from the target surface.

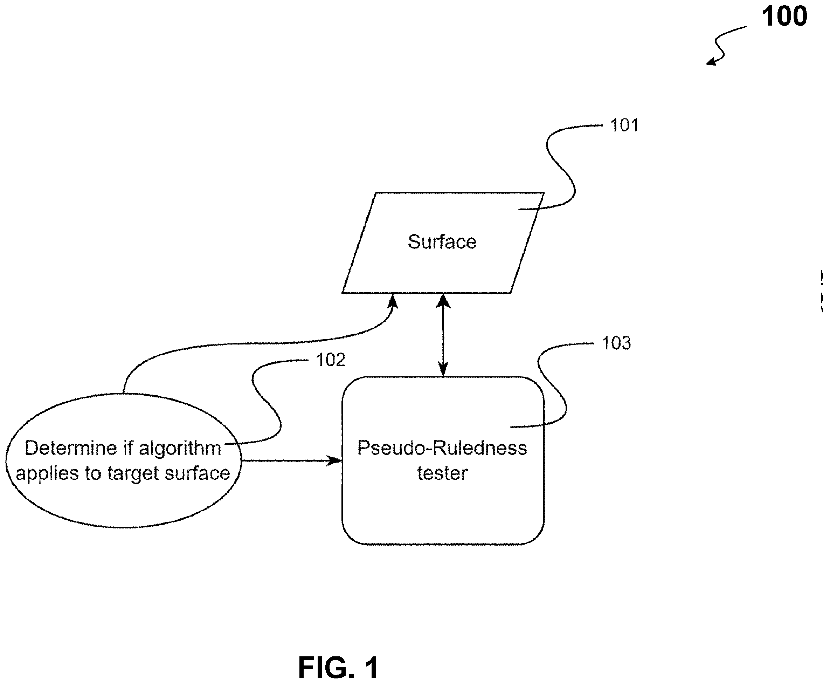

FIG. 1 depicts a flow diagram to determine pseudo-ruledness 100 of a surface, according to one embodiment of flank milling using determined flattest lines. In this embodiment, pseudo-ruledness, also referred to as nearly ruled surface, may be identified as a surface that is not exact-ruled and/or a surface that is not far from being a ruled surface (e.g., spheres, ellipsoids, toroidal, etc.). That is, by determining pseudo-ruledness, the system may identify surfaces where use of the flattest lines would yield the curves lying on the surface which are closest to be straight lines.

According to the flow diagram for determining the presence of pseudo-ruledness 100 on a surface, in a first step, the surface 101 under consideration is examined for pseudo-ruledness 102 to ensure that the algorithm may be applicable for the given surface. The exact ruledness of a surface may be determined using standard methods, which may include, for example, checking the control polygon arrays of intermediate points for flatness. If exact ruledness is determined not to be present, the flattest lines algorithm may pointwise produce a geometrical entity, for example, a 1D manifold that has a length but cannot have an area, closest to a ruling belonging to the surface 101. In this embodiment, the algorithm may combine the differential concepts of asymptotic directions and a minimum of the absolute value of the normal curvature.

As depicted, a pseudo-ruledness tester component 103 may be executed, incorporating an appropriate criterion to determine the properties of the surface. The applicable criterion involves evaluating the Gaussian curvature K over the entirety of the surface 101 or one or more sub-areas of the surface 101. In one embodiment, the evaluation represents a discrete equivalent of the evaluation along the entire continuous surface. The criterion requires that the Gaussian curvature K is either non-positive or, if positive, has a corresponding curvature radius larger than a prescribed value, also referred to as a threshold value as determined by the system or the user.

In making the determination, when K is zero over one or more areas of the surface 101, which may also be referred to as sub-areas or patches, the said areas may be considered developable. Developable areas or surfaces may be considered a special type of surface with the property that they can be isometrically unrolled or unfolded onto a plane without distortion. That is, there exists a straight line passing from every point S of the surface 101 and the tangent plane along that straight line has a constant orientation (e.g., the pointwise-defined normal vector to the surface 101 does not change its orientation when the point considered moves along the straight line): note that K is zero on every point of a developable surface. In the cases of developable target surfaces, precise flank milling is possible with a cylindrical or conical tapered tool, except in a scenario where the cutting tool shank radius is larger than the surface maximum curvature radius and the concave side of the target surface is machined. When K is negative, this implies the existence of a normal section with zero curvature. The flow diagram of FIG. 1 illustrates the process of determining pseudo-ruledness, which may be an initial step in implementing the flattest lines algorithm for optimal flank milling of non-ruled or nearly ruled surfaces. Accordingly, the system determines pseudo-ruledness of the surface to identify whether the surface may be used for flank milling via determined flattest lines, if determined by the system and pseudo-ruledness tester component that the surface 101 is a pseudo-ruled surface, then the system may move forward to identify near-zero-curvature isolines (or one-dimensional manifolds).

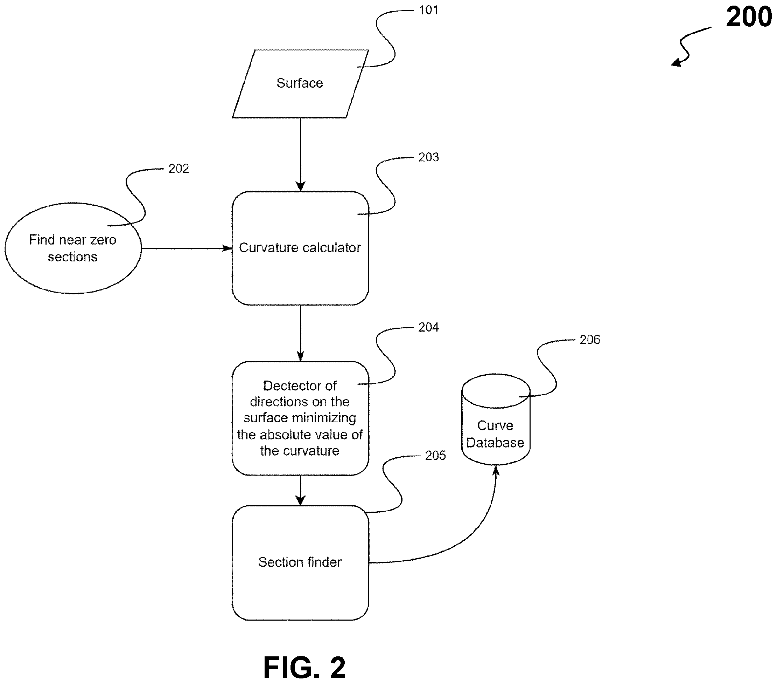

FIG. 2 is a flow diagram illustrating a second step of the method for flank milling via determined flattest lines where the input surface is used to identify near-zero curvature manifolds 200. In this step, the input surface 101, may be used to identify near-zero sections 202, e.g., curvature manifolds. To achieve this, a curvature calculator component 203, may be executed to calculate appropriate patches on the surface 101. The curvature calculator 203 may be executed to determine regions on the surface where the Gaussian curvature is either negative, zero, or positive but does not exceed a prescribed positive physical threshold, which is ideally small, for example, as compared to the machining tolerance, which is a parameter set by the CAM user.

In an example of machining an impeller blade with complex curvature characteristics, certain regions of the blade surface may have positive Gaussian curvature with curvature radii larger than a threshold value suited for flank milling by the machine, while other regions may have zero or negative Gaussian curvature. Accordingly, identifying these regions is a needed step for optimizing the machining process.

In one embodiment, upon identifying a set of regions of the surface with the desired curvature characteristics, the process proceeds to execute a detector of directions component 204 on the surface 101 to minimize the absolute value of the normal curvature. The detector of directions component 204 may identify at least one such direction for each point on the surface, provided the surface is smoothly defined. These directions are important because they are represented by continuous functions defined on a compact set provided the surface is smooth in the sense of differential geometry.

In one embodiment, the detector of directions component 204 may operate by performing a gradient descent algorithm to iteratively find the optimal direction of minimum normal curvature. Alternatively, the detector of directions component 204 may use other optimization techniques known in the art to achieve the same objective.

Subsequently, a section finder component 205, may be utilized to generate curves with near-zero-curvature based on the directions identified by the detector of directions component 204. These generated curves may then be stored in a curve database 206, for future use.

In one embodiment, the section finder component 205 may generate curves by connecting points along the identified direction of minimum absolute value of normal curvature, effectively creating a smooth path that follows the curvature of the surface 101. These curves may then be used to guide the tool path of a milling machine, ensuring that the tool stays aligned with the curvature of the surface, thereby maximizing machining efficiency and surface finish quality.

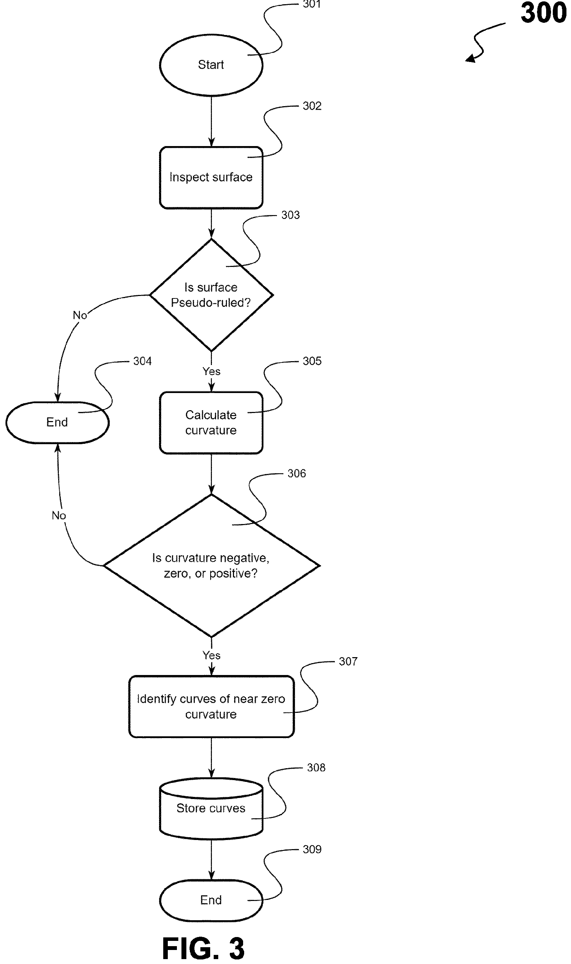

FIG. 3 shows a flow diagram for calculating near-zero-curvature isolines 300 illustrating the process of calculating near-zero-curvature isolines (hereafter referred to simply as isolines) on a target surface, according to one embodiment. These isolines connect points on the surface with iso-minimal values of the modulus of the normal curvature, e.g., values as close as possible to zero.

The process begins at the start point 301 where the process may be implemented by a computer system executing one or more non-transitory computer-readable storage media comprising computer instructions that, when executed by one or more processors of a computer system, cause the computer system to perform the disclosed operations. The process receives a target surface and then proceeds to inspect the received target surface 302. Next, the surface is examined against a set of pseudo-ruledness criteria to determine whether the surface meets the pseudo-ruledness criterion 303. This examination involves assessing whether the surface exhibits characteristics consistent with pseudo-ruled surfaces, such as the presence of regions with Gaussian curvature that is negative, zero, or positive but not exceeding a prescribed positive threshold (as also described in FIG. 1). In one embodiment the prescribed positive threshold may be based on the machine and machining capabilities, where the machine is not capable of flank milling past this threshold. The threshold may be adjusted based on the stage of flank milling, for example, during roughing, semi-finishing, and/or finishing stages.

If the surface is determined not to be pseudo-ruled, the process follows the "NO" branch and exits the process at an endpoint 304. This endpoint signifies that no further calculations are performed on surfaces that do not meet the pseudo-ruledness criterion.

If, on the other hand, the surface is determined to be pseudo-ruled, the process follows the "YES" branch and proceeds to calculate the directions for the flattest lines on the surface, i.e., directions are detected that minimize the absolute value of the normal curvature 305. This calculation involves identifying and determining the optimal direction along the surface for which the curvature is closest to zero.

Following this and based on receiving the calculated direction of flattest lines along the surface being inspected, the process examines the curvature closest to zero to determine whether it is negative, zero, or positive within a prescribed threshold 306. This is done by way of stepping in the calculated directions, where curvature is again examined 306 to be non-positive or, alternatively, not to exceed, when positive, a prescribed positive physical threshold. At this point the system performs another check and if the curvature does not meet these criteria, the process follows the "NO" branch and exits the process at endpoint 304.

If the curvature does meet the identified criteria, the process follows the "YES" branch and proceeds to identify curves of near-zero curvature 307 on the inspected surface. These identified curves of near-zero curvature, also referend to as isolines, represent paths along the surface where the absolute value of the curvature is minimal, thereby providing valuable information for machining or other applications.

The identified isolines (curves with near-zero absolute value of the normal curvature) 307 may then be stored in a database 308 configured to store data and information related to curves. This database may serve as a repository for the isolines, allowing them to be retrieved and utilized in future processes.

Finally, the algorithm reaches an endpoint 309, signifying the successful completion of the process and the identification of near-zero-curvature isolines for the curvature patches on the target surface determined to have pseudo-ruledness.

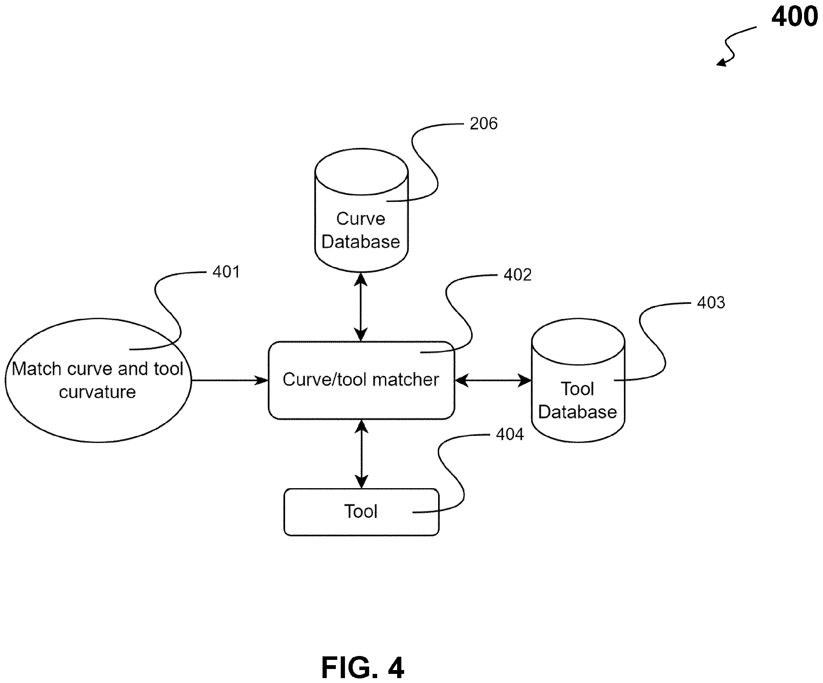

FIG. 4 is a flow diagram illustrating the process of matching the curvature of identified isolines with the curvature of a machining tool 400. This process aims to determine the size and shape of the tool that may be used for machining the target surface based on the previously identified near-zero-curvature isolines stored in the curve database.

In one embodiment, the process begins at the matching curve and tool curvature step 401. This step initiates the procedure of finding a suitable tool for machining by matching the curvature of the isolines with the curvature of available tools, available on the machine for flank milling.

In this embodiment, the process proceeds to the curve/tool matcher component 402. The curve/tool matcher component 402 may be configured to perform the matching operation by comparing the curvature of the isolines received from the curve database 206, with the curvature of potential tools received from a tool database 403. The curve/tool matcher component 402 is responsible for determining an appropriate machining tool that has a curvature profile that closely aligns with the isolines, where closely may be defined based on a predetermined threshold given by the user. For example, usually the tool is chosen so that its radius of curvature is a threshold-tolerance lower than the more restrictive radius of curvature found along the isolines. In one embodiment, the determination may be based on closely aligning a curvature profile of a tool with the isolines using a threshold value set by the user or in another embodiment and/or a threshold value determined by the system based on prior executions of the flank milling tools on similar isolines. That is, in one embodiment using machine learning, the system may define being closely aligned based on historical data compiled by the same machine or other machines.

As an input, the curve/tool matcher component 402 may be configured to receive information from the curve database 206, which includes the isolines identified in the previous steps of the process. These isolines represent paths along the target surface where the normal curvature is minimal in absolute value.

Additionally, the curve/tool matcher component 402 may be configured to receive information from the tool database 403. This database may include information about various machining tools that are available for use, including their curvature characteristics.

In one embodiment, the curve/tool matcher component 402 may be configured to identify or determine an appropriate barrel tool that has a curvature slightly higher than the isolines from the curve database 206. In one embodiment, the slightly higher curvature may be based on a predetermined threshold as set by the user or by the system based on prior operations. This matching ensures that the selected tool efficiently machines the surface while minimizing deviations from the desired curvature profile.

The identified or determined barrel tool 404 may then be used for the machining operation. This process may be applied to the entire surface 101 or to individual patches of the surface, depending on the requirements of the machining operation. When applied to individual patches, the matching method is performed separately for each patch, ensuring optimal tool selection for each section of the surface. In the embodiment where the matching method is performed separately for each patch, the threshold may also be adjusted for each patch based on, for example, the area of the surface and whether a particular tool is able to reach that area given the surrounding surfaces. For example, should there be multiple patches (1, 2, ... N) that are identified as patch 1, patch 2, ... patch N, the threshold of the barrel tool 404 having a slightly higher curvature than the isolines for patch 1 may be different than the threshold of patch 2, and so on. That is, the system may be configured to calculate the threshold for acceptable variation in the curvature for each patch unique to the circumstances and geometries surrounding the patch. The system may also be configured to reduce the number of tool changes based on the number of tools identified or determined to be used along with the tool path determination described in further detail herein.

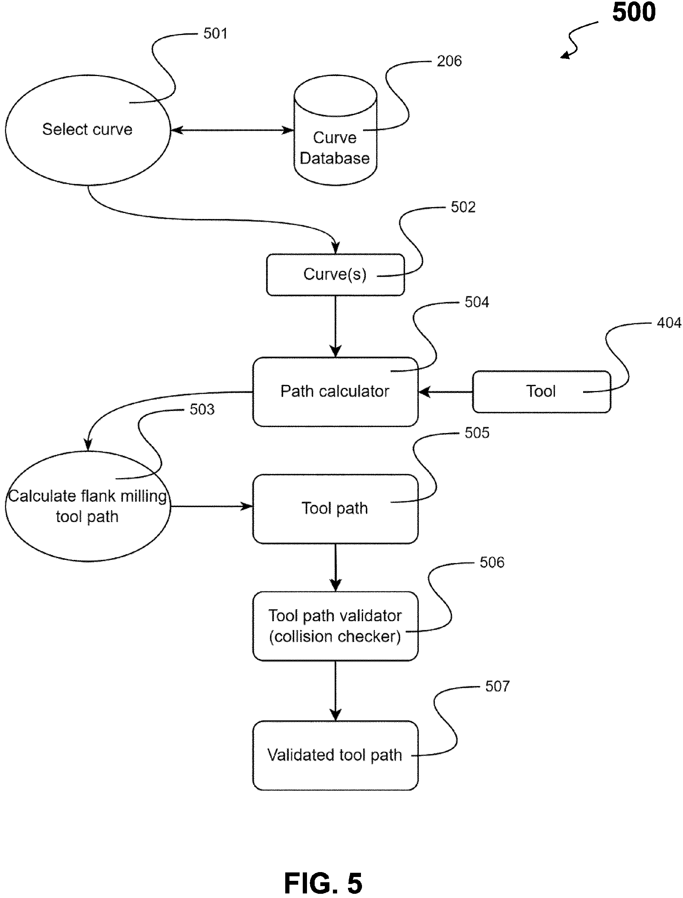

FIG. 5 is a flow diagram illustrating the process for calculating a flank milling tool path 500 where the determining of the flank milling tool path may be based on the selected curves from the curve database and the identified tool, i.e., machining tool. The process, in one embodiment, generates a tool path that follows the near-zero-curvature isolines, allowing for efficient and precise machining of the target surface.

In one embodiment, the process method selects a set of one or more curve(s) 501 as an initial step, from the curve database 206 which is configured to store the isolines identified in the previously described method steps. In this step, one or more curves 502, are selected from the curve database 206 as described herein where the selection of a starting point of the one or more curve(s) may, for example, be by the user. In some embodiments, the criteria that may determine which curves are selected is by way of a series of sequentially adjacent near-zero-curvature-isolines on the surface being selected, for example, starting from a hint point that is typically lying at the natural border of the surface to be machined. The selected one or more curve(s) 502 may correspond to the isolines on the target surface or a patch on the surface that exhibit near-zero curvature. The selected curves serve as a milling-guide for the flank milling operation.

The process continues to the next step of calculating a flank milling tool path 503, where the tool and the surface or surface patch along with the isolines from the curve database 206 are received as input and used to calculate the flank milling tool paths. This step initiates the procedure for generating the tool path based on the selected one or more curve(s) 502 and the chosen tool 404. This step may be executed using a path calculator component 504, to generate the tool path based on the selected one or more curve(s) 502 and the tool 404 that was previously identified. The identified tool 404 may be the appropriate barrel tool that was determined to match the curvature of the isolines in the previous steps.

The path calculator component 504 may be configured to calculate a tool path 505, e.g., the flank milling tool path, in a manner that ensures the tool path closely follows the selected one or more curve(s) 502. This calculated tool path 505 represents the optimal path for the tool 404 to take during the machining operation in order to achieve the desired surface profile. In one embodiment, the optimal path for the tool may be based on the path which the flank milling process should follow with the tools that produce the most accurate cutting of the part, where most accurate may refer to where the envelope swept by the cutting tool while moving (which corresponds to the shape carved inside the stock material) matches the desired target surface up to second-order in the language of differential geometry.

In one embodiment, at a final step, the process includes the tool path validator (collision checker) component 506. This step involves validating the received calculated tool path 505 to ensure that the tool path is free of collisions and tolerance-exceeding interferences with the target surface (also known as "gouges"). The validation process ensures that the calculated tool path 505 is safe, free of collisions, and feasible for use in the machining operation.

With the completion of the tool path validation step 506, the process may conclude, and the validated tool path 507 that is generated may be ready for use in the flank milling process. By following the near-zero-curvature isolines, the tool path ensures efficient and accurate machining of the target surface, resulting in a high-quality final product.

As described herein, differential geometry is a mathematical discipline that studies the geometry of smooth shapes and smooth spaces by exploiting tools of differential calculus (functional derivatives) to analyze surfaces, otherwise known as smooth manifolds. The present embodiments use determined Gaussian curvatures of the target surface, where the Gaussian curvature is an intrinsic measure of curvature, depending only on distances that are measured "within" or along the surface, not on the way it is isometrically embedded in Euclidean space.

The disclosed embodiments of flank milling via determined flattest lines provide systems and methods to combine the concept of differential geometry (such as asymptotic directions and Gaussian curvature) with shape-matching arguments, to develop an ad-hoc working-frame where in real-time typically barrel-shaped cutting tools (also known as circle-segment tools) may flank-mill general, non-ruled surfaces in a technologically optimal way. In addition, the embodiments determine asymptotic lines and minimum curvature indicated by a curve tangent to an asymptotic direction of the surface to mark the transition between cross sections with positive and negative curvature.

As described in the disclosed embodiments, the systems, devices, and methods for flank milling via determined flattest lines do not modify the underlying geometry and instead use an alternative description of the target surfaces in order to allow a more general way of flank milling. That is, the ruledness of a surface (when present) may be described independently from the reference frame via independency of any particular representation of the target surface by proposing a method that has, as a byproduct, the re-parametrization of the ruled surface with the ruled direction as isoparametric, meaning as having the same constant parameter's value (under different coordinate systems). In one embodiment, the flattest lines method may be independent of any particular representation of the target surface and, when the latter is ruled with non-isoparametric rulings, the system may determine a surface representation which provides the rulings as isoparametrics.

In one embodiment, the Flattest Lines method addresses the specific problem of making barrel-shaped tools (i.e., with curved flank) able to machine nearly ruled surfaces, where the "nearly" is quantifiable at a differential level. This may be performed by differential matching of flattest lines existing on the target surface with the mild curvature of barrel-shaped cutting tools, as described in detail herein. That is, Flattest Lines relies on the construction of a global continuum of points lying on the target surface. Further, the Flattest Lines method may be based on an algorithm that generalizes the concept of asymptotic lines, defined as continuous curves that act as a surrogate of rulings on the target surface when the latter is not exactly ruled. In other words, the Flattest Lines method proposes the construction of a continuous 1-d manifold lying on a target surface to indicate to the user relevant information about the most convenient geometric patterns the cutting tool should follow to machine that target surface.

The disclosed embodiments of the Flattest Lines method also disclose construction of suitable patterns to provide a net of curves which serve as geometric framework for the main motion of the cutting tool. The tool path determination may also be based on typical motion parameters, such as feed parameters (e.g., velocity, acceleration, and jerk drive limits) of a particular milling machine.

As has been described, the Flattest Lines embodiment uses tools to achieve finishing quality, i.e., differential-based matching of cutting-tool curvatures with flattest lines extracted from the target surfaces in zones where the Gaussian curvature is either non-positive or mildly positive. In addition to the disclosed methods providing a framework for flank-milling, the embodiments allow extending of the set of flank-milling machinable shapes.

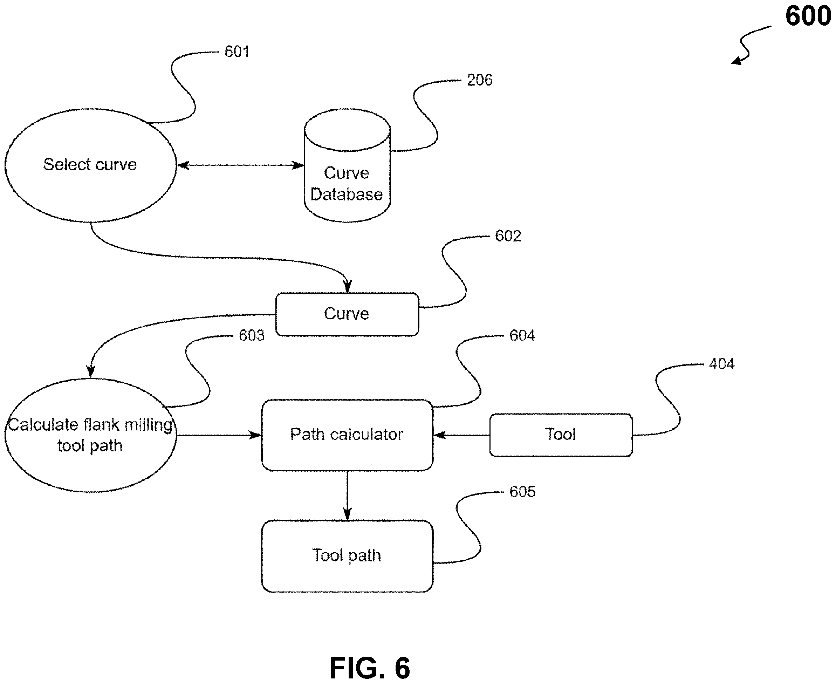

FIG. 6 illustrates an alternative embodiment of the tool path generation 600 where the path calculator may first determine a tool path based on the selected one or more curve(s) and then, without taking into account the tool itself yet, determine a tool path where the tool path may then be adjusted or modified based on the curvature of the tool. That is, in this embodiment, the machining tool may be selected based on the selected one or more curve(s) and the tool path where the system may be configured to select the tool not only based on the matching curvature but also based on the determined tool path. At an initial step the system is configured to select a curve 601 from a curve database 206. The selected curve 602 may then be transmitted to the next step for calculating a flank milling tool path 603 based on the selected curve 602. A path calculator 604 may then receive the calculated flank milling tool path along with a tool 404 from a subset of available tools to determine a tool path 605. This embodiment provides the system an added layer of validation based on first having a flank milling tool path determined based on the one or more curve(s) and then adjusting or modifying the tool path based on the tool selected from the subset of tools based on the initially determined tool path. Once the tool is selected, the tool path may then be modified or adjusted.

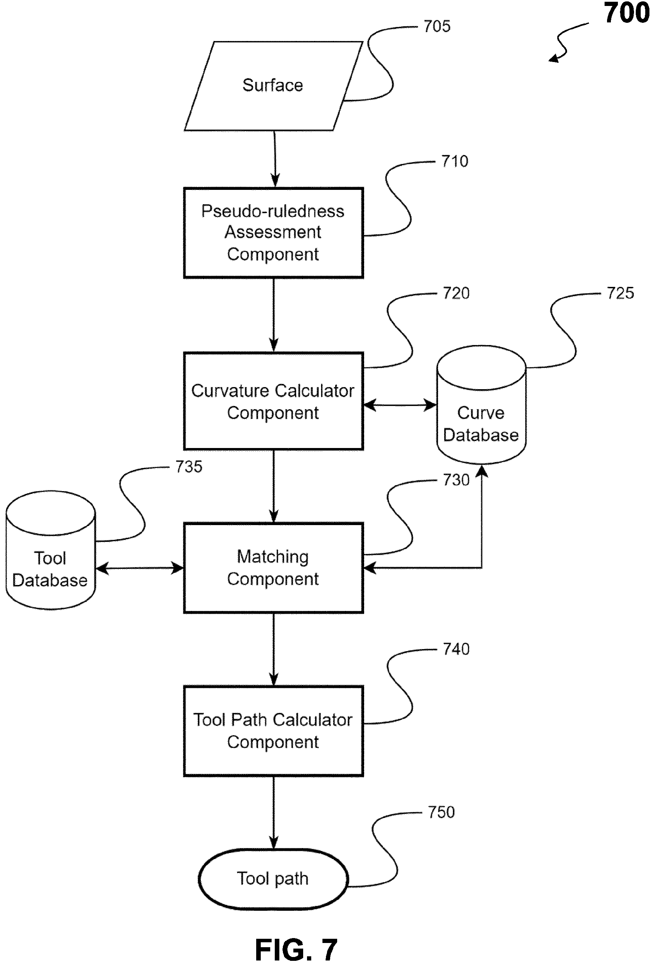

FIG. 7 depicts a flowchart of the flattest line method as described herein and implemented by the system. The system, via a computing device having a processor and addressable memory, takes as input the surface to be machined 705 and may be configured to execute a pseudo-ruledness assessment component 710 to determine whether the disclosed flattest line method applies to the target surface. Once the determination has been made that there are pseudo-ruledness sections (or subsections) on the surface, a curvature calculator component 720 may determine a direction on the surface where the direction minimizes the absolute value of the curvature by way of determining whether the curvature is negative, zero, or positive. According to one embodiment, the near-zero curvatures may then be stored in a curve database 725. In one embodiment, the curves of near-zero curvature may be identified and stored, where the system may then proceed to determine a tool having a tool curvature that matches the selected curves of near-zero curvature. That is, the matching component 730 may receive as input the set of curves, either from the curve database 725 or directly from the curvature calculator component 720, and a set of available machining tools from a tool database 735 to then match the selected curves to a tool or vice versa, match a tool from the available tools to the selected curves. The matched tool and curvatures may then be transmitted to a tool path calculator component 740 configured to determine a flank milling tool path based on the matched tool and its cutting properties and the pseudo-ruledness sections (or subsections) on the surface. Optionally, and not shown in FIG. 7, a tool path validator component may be executed to validate the determined and calculated tool path and ensure the tool path is free of any collision or other issue during execution. The system may then output the tool path 750 for the cutting tool of the CNC machine.

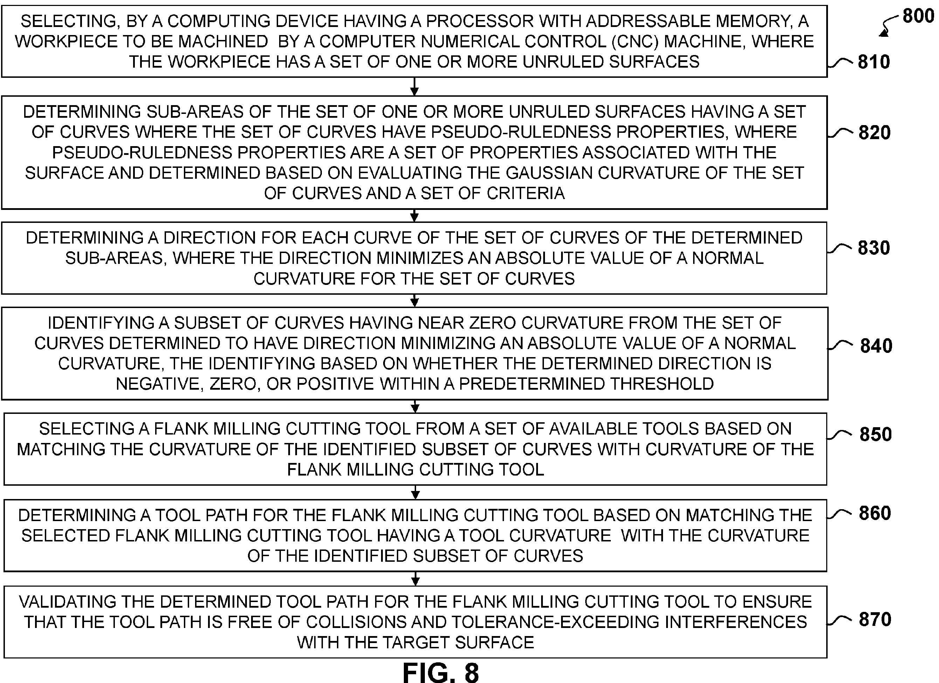

The above disclosed embodiments may include an embodiment of a method of determining a machining tool path, as illustrated in a top-level flowchart of FIG. 8. The steps may comprise the following steps: (a) selecting, by a computing device having a processor with addressable memory, a workpiece to be machined by a computer numerical control (CNC) machine, where the workpiece has a set of one or more unruled surfaces (step 810); (b) determining sub-areas of the set of one or more unruled surfaces having a set of curves where the set of curves have pseudo-ruledness properties, where pseudo-ruledness properties are a set of properties associated with the surface and determined based on evaluating the Gaussian curvature of the set of curves and a set of criteria (step 820); (c) determining a direction for each curve of the set of curves of the determined sub-areas, where the direction minimizes an absolute value of a normal curvature for the set of curves (step 830); (d) identifying a subset of curves having near-zero curvature from the set of curves determined to have direction minimizing an absolute value of a normal curvature, the identifying based on whether the determined direction is negative, zero, or positive within a predetermined threshold (step 840); and (e) selecting a flank milling cutting tool from a set of available tools based on matching the curvature of the identified subset of curves with curvature of the flank milling cutting tool (step 850); and (f) determining a tool path for the flank milling cutting tool based on matching the selected flank milling cutting tool having a tool curvature with the curvature of the identified subset of curves (step 860). Optionally, the method may perform the step of (g) validating the determined tool path for the flank milling cutting tool to ensure that the tool path is free of collisions and tolerance-exceeding interferences with the target surface (step 870).

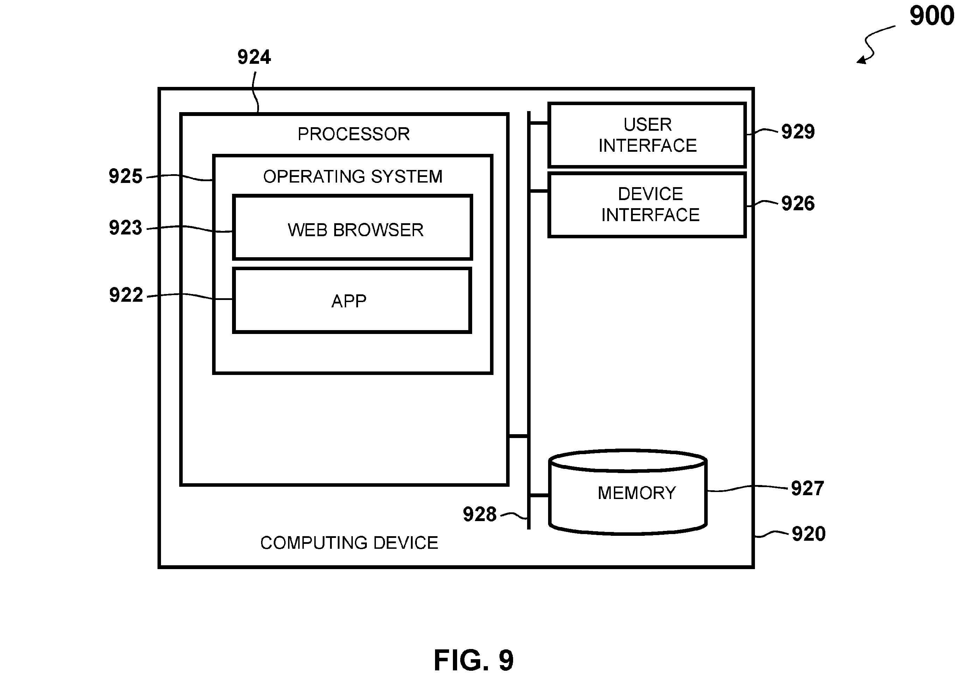

FIG. 9 depicts a top-level functional block diagram of a computing device system 900 in a computer aided manufacturing (CAM) environment. The example operating environment is shown as a computing device 920 comprising a processor 924, such as a central processing unit (CPU), addressable memory 927, an external device interface 926, e.g., an optional universal serial bus port and related processing, and/or an Ethernet port and related processing, and an optional user interface 929, e.g., an array of status lights and one or more toggle switches, and/or a display, and/or a keyboard and/or a pointer-mouse system and/or a touch screen. Optionally, the addressable memory may include any type of computer-readable media that can store data accessible by the computing device 920, such as magnetic hard and floppy disk drives, optical disk drives, magnetic cassettes, tape drives, flash memory cards, digital video disks (DVDs), Bernoulli cartridges, RAMs, ROMs, smart cards, etc. Indeed, any medium for storing or transmitting computer-readable instructions and data may be employed, including a connection port to or node on a network, such as a LAN, WAN, or the Internet. These elements may be in communication with one another via a data bus 928. In some embodiments, via an operating system 925 such as one supporting a web browser 923 and applications 922, the processor 924 may be configured to execute steps of a process establishing a communication channel and processing according to the embodiments described above.

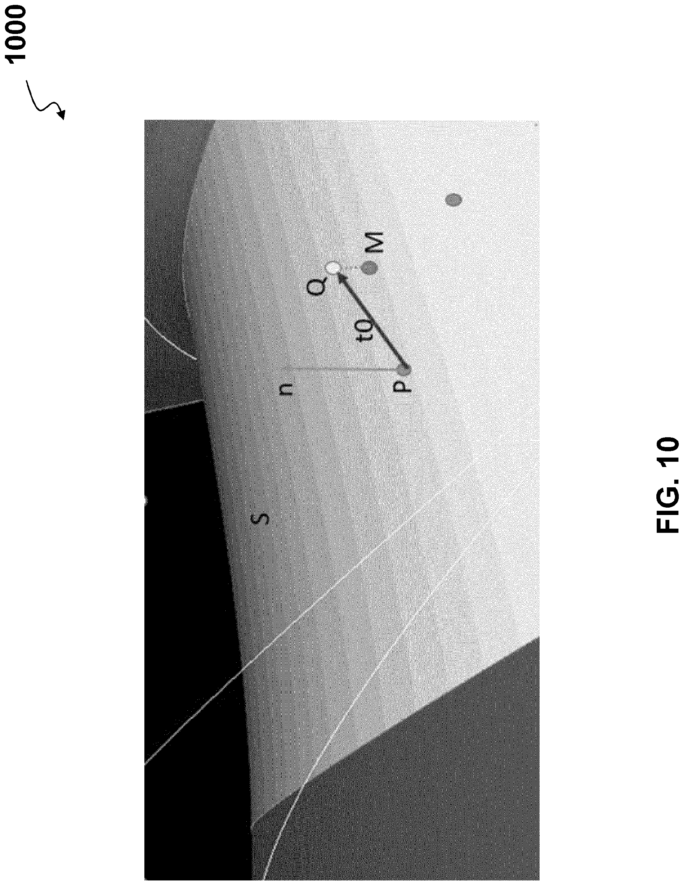

FIG. 10 illustrates a graphical representation of the surface flattest lines CAD/CAM method 1000, which is used to identify and generate curves on a non-ruled target surface (S) that are closest to being ruled. The figure includes two separate computer-generated images depicting the steps involved in the method.

In the first image, a target surface (S) is presented, and a point P on the surface is identified. For each point P on the surface, its Gaussian curvature (K_P) is calculated. If K_P is non positive, this indicates that there exists a normal section with zero curvature. A small step (d), for example, a fraction of the tolerance of the cutting strategy, is taken along the corresponding tangent (t_0) to reach a new point Q, which can be expressed as Q = P + d * t_0. The tangent t_0 is calculated using the equation K1 * cos^2(Phi) + K2 * sin^2(Phi) = 0, which has a solution for the angle Phi, since K1 is opposite in sign to K2 (or one amongst K1 and K2 is zero). As the step is taken along the tangent plane to the surface (S) at point P, this step will generally move Q away from the surface. To address this, Q is projected back onto the surface (S) using a surface minimum distance calculation, obtaining a new point M, shown in green.

If **M** lies again on S, the procedure above may be repeated by recalculating the Gaussian curvature kM and move again by another step, thereby calculating the points **M1, M2,** etc. The sequential collection of such points may be used to determine a piecewise linear curve (the smaller the step d, the more precise the curve): if all points **P, M, M1, M2** of the surface S yield negative Gaussian curvature, this method simply produces the so-called asymptotic lines of S, that is, the curves joining points with zero normal curvature on S (asymptotic lines need not be straight lines in general: they will be straight only if S is ruled).

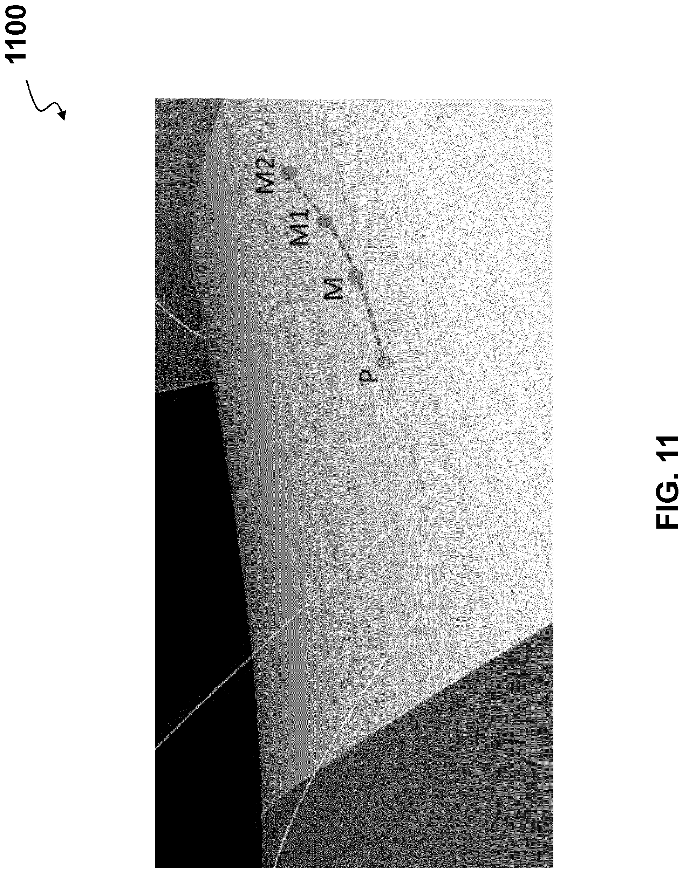

FIG. 11 illustrates the flattest lines CAD/CAM method 1100 with a focus on the generalization of the concept of asymptotic lines to accommodate surfaces with positive Gaussian curvature at some points. The method continues from point M, which was obtained in the previous step. The Gaussian curvature (K_M) is recalculated, and a check is performed to determine if K_M is positive, indicating that the principal curvatures K1 and K2 have the same sign. In such cases, the equation K1 * cos^2(Phi) + K2 * sin^2(Phi) = 0 has no solution for Phi, which means that the tangent vector (T_0) used in the previous step must be replaced by a different vector.

Two possible replacement vectors are T1 and T2, which correspond to the principal directions associated with K1 and K2, respectively. The method selects T1 if the absolute value of K1 is less than or equal to the absolute value of K2, and T2 otherwise. In essence, the goal is to walk along a direction that closely resembles the zero-curvature direction, which would be the case if the surface were exactly ruled.

The method combines the concepts of asymptotic lines (curves on the surface joining points with zero normal curvature, which exist only when the Gaussian curvature is non-positive) and curvature lines (curves on the surface joining points with minimal curvature, which always exist-provided the surface is smooth-regardless of the Gaussian curvature's sign). By using this approach, the method calculates subsequent points M1, M2, and so on, ultimately generating a curve on the surface (S) that is as close as possible to a ruled line. The smaller the step d, the smoother the resulting curve.

Embodiments of the flattest lines CAD/CAM method allow for the identification and generation of near-ruled curves on surfaces that may have regions with positive Gaussian curvature, thereby expanding the applicability of the method to a broader range of target surfaces.

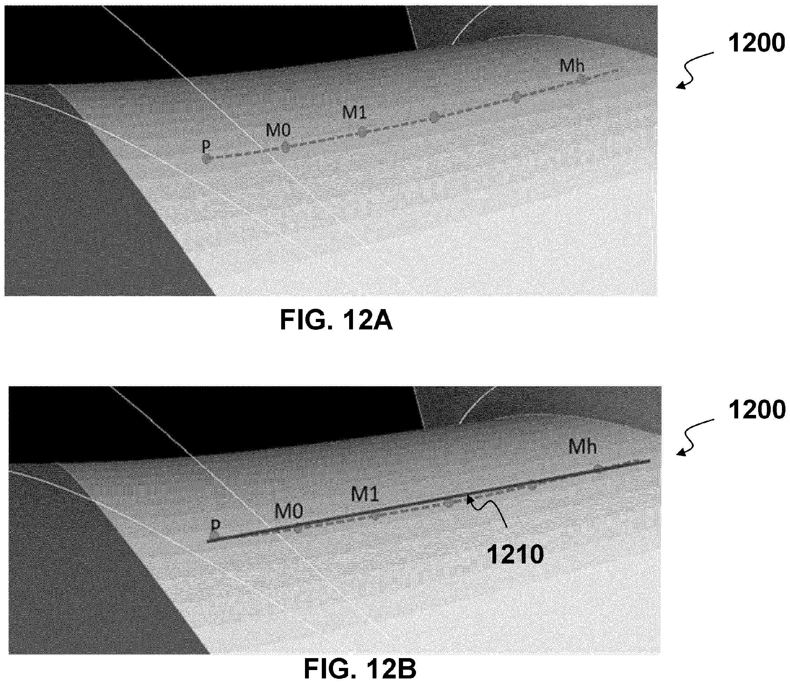

In FIGS. 12A-12B, two images are presented to illustrate the concept and utility of the flattest lines CAD/CAM method for nearly ruled surfaces 1200. In both images, a surface is depicted with a series of points labeled P, M0, M1, ..., Mh. These points represent the curve generated by the flattest lines method as it identifies set of contiguous points on the surface that are closest to straight lines. The point **P** may act as a "source point" for the calculation of the flattest line: the choice of **P** as initial point is typically at the boundary of the surface S or at some reference curve lying on S. In one example, P may be interactively chosen by the software user.

The image of FIG. 12A shows the curve formed by the points P, M0, M1, ..., Mh as a dotted line. The curve is a piecewise linear approximation of the flattest line starting at P; the precision of the approximation depends on the choice of the step d mentioned above, which need not be a constant value but may be varied dynamically to achieve any desired precision. This curve is the result of the flattest lines method, which aims to approximate the ideal ruling for the surface.

The image of FIG. 12B presents the same curve and series of points, but with an additional line 1210 superimposed on the dotted line. The line 1210 represents a linear fit that minimizes the sum of the squared distances from the points (P, M0, M1, ..., Mh) to the fitted line. This linear fitting is an example of how the quality of the flattest lines may be assessed in some embodiments.

It should be noted that the flattest lines method is specifically conceived for nearly ruled surfaces. It would not be applicable to generic surfaces that are far from ruled, such as spheres, ellipsoids, or toroidal surfaces. However, for nearly ruled surfaces, the method yields curves that are closest to straight lines and provides a valuable means of approximating the rulings for machining purposes.

If the maximum distance from any of the points (P, M0, M1, ..., Mh) to the fitted line 1210 is less than the cycle tolerance, the line 1210 may be considered a valid ruled approximation of the target surface. This approximation may be used for flat milling operations, and the rulings generated by the method may serve as geometric inputs for machining processes.

In this embodiment, the steps in the iterative calculation of **M, M1, M2,..., Mh** on S may be performed until a piecewise linear curve is produced on the surface S, the linear curve being called Flattest Line because it joins points on S with minimum absolute value of curvature. That is, the Flattest Line is the geometric entity closest to a ruling that may be found on S starting at the point **P,** and calculated by mixing the concepts of asymptotic lines and curvature lines: in case of an exact ruled surface, this method simply retrieves a ruling passing through **P.** A linear fitting of the points **P, M, M1, M2,..., Mh** (obtained by standard points fitting techniques) may quantify the distance of the flattest line from a true ruling as the maximum of the distances of the points **P, M, M1, M2,..., Mh** from the linear fitting line. Accordingly, the flattest lines method may be executed in generating curves that closely approximate the ideal rulings for nearly ruled surfaces and provide an approach to assess the quality of the generated lines for machining applications.

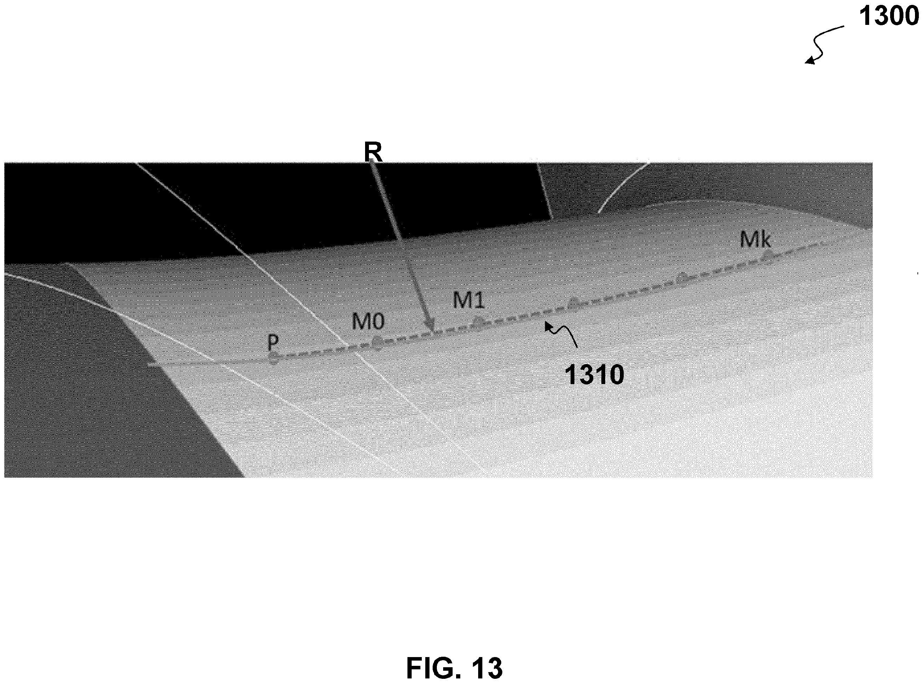

FIG. 13 demonstrates the use of circular arc fitting 1300 for determining the suitability of a target surface for flank milling by cutting tools with curved flanks, such as barrel tools. The image depicts a surface with a series of points labeled P, M0, M1, ..., Mk. These points represent the curve generated by the flattest lines method as it identifies points on the surface that are closest to the straight lines.

As illustrated, the points are connected by a dotted line, representing the curve formed by the flattest lines method on the surface. Superimposed on this dotted line is a line 1310 representing a circular arc fitting of radius R. The line 1310 serves as an approximation of the curve using a circular arc, and its radius "R".

If the circular arc, line 1310, is able to fit the series of points (P, M0, M1, ..., Mk) within a tight tolerance, for example, a fraction of the tolerance of the cutting strategy, this indicates that the target surface is suitable for flank milling using cutting tools with curved flanks, such as barrel tools. In such cases, the radius of curvature of the barrel tool's flank may be chosen based on the radius "R" of the fitted circular arc. Ideally, the two radii should be equal for optimal contact during machining. However, in practice, it may be preferable to adjust the barrel-shaped cutting tool's flank radius to a value slightly lower than "R" to account for various factors.

Furthermore, this concept may be generalized beyond simple circular arcs to bi-arcs (a pair of arcs with different radii joined with tangent continuity), multi-arcs (multiple arcs joined together), or even different fitting curves such as clothoids. Clothoids are curves with the property that curvature is linearly related to arc length, making them widely used as transition curves in various applications, including railroad engineering.

Accordingly, the present embodiments illustrate the utility of a circular arc fitting in assessing the suitability of a surface for flank milling with curved flank cutting tools and highlight the flexibility of considering various arc and curve fittings for optimal machining results.

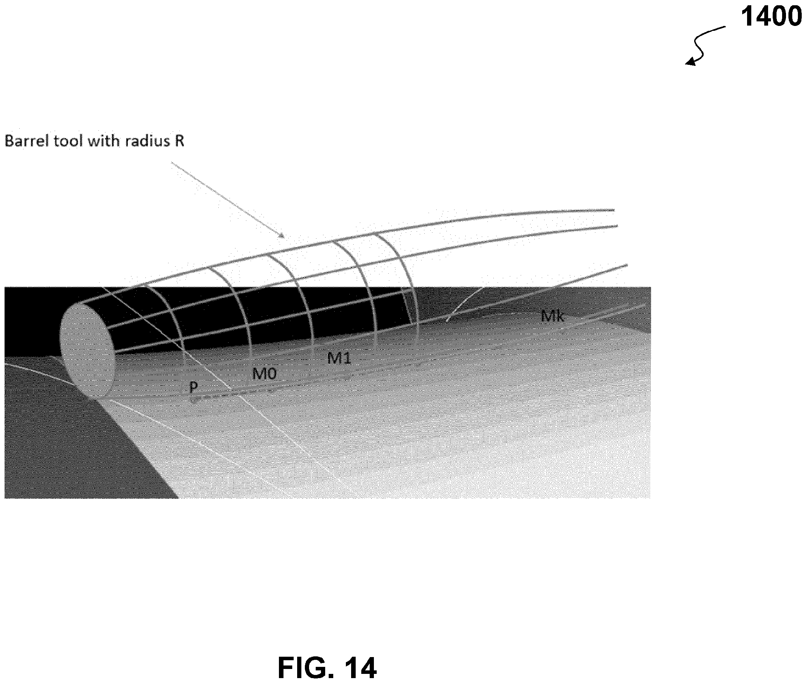

FIG. 14 shows an example of where optimal local curvature matching between the cutting tool and the target surface is achieved in the application of flank milling on a target surface using a barrel tool with a curved flank 1400. The target surface is the same as in previous figures and is depicted with the series of points labeled P, M0, M1, ..., Mk. These points represent the curve generated by the flattest lines method as it identifies points on the surface that are closest to the straight lines. The points are connected by a dotted line, representing the curve formed by the flattest lines method on the surface.

Superimposed on this dotted line is a line frame illustration of a barrel tool with a curved flank. The barrel tool's curved flank is shown to have a radius of curvature labeled "R." The barrel tool is oriented such that its curved flank aligns with the series of points (P, M0, M1, ..., Mk) and is positioned to perform the flank milling operation on the surface. In this way, the system may predict the size of a barrel-cutter which is most suited to machine those specific surfaces with respect to scallop height and curvature matching between the cutting tool and the target surface.

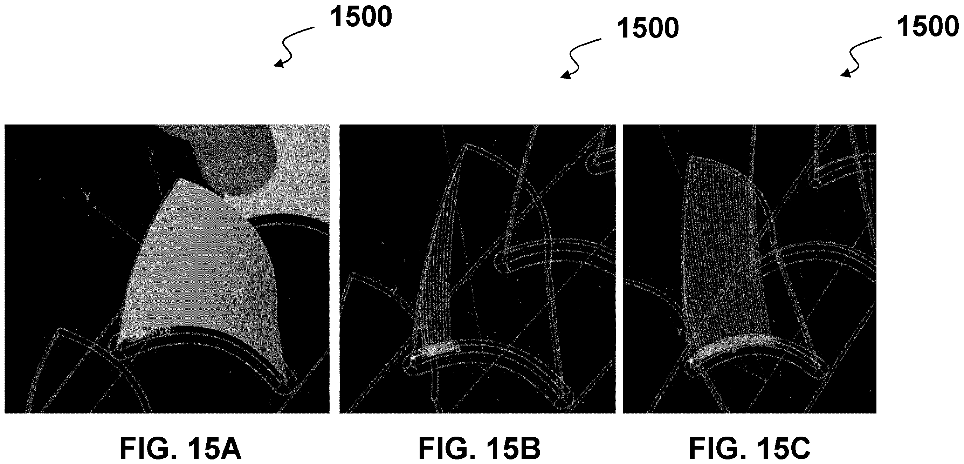

FIGS. 15A-15C serve to demonstrate an example of a family of patterns 1500 on the target surface generated by the flattest lines method that may be used as a flank-milling-like pattern (as opposed to standard geometrical patterns that are used as point-milling-patterns) to mill the target surface. The radius "R" of the barrel tool's curved flank may be selected based on the fitted circular arc radius, as described in FIG. 14. The alignment of the barrel tool along the curve enables efficient and precise machining of the surface, with the curved flank of the tool following the near-zero-curvature isolines.

FIGS. 15A-15C visually depict an example of the progressive results of a practical calculation of the flattest lines method for further flank milling operations on surfaces that may not be exactly ruled, but are nearly ruled or pseudo-ruled. Each flattest line shown has a source point (i.e., the point labelled as **"P"** in FIGS. 11 through 14) lying on a curve forming the boundary of the target surface.

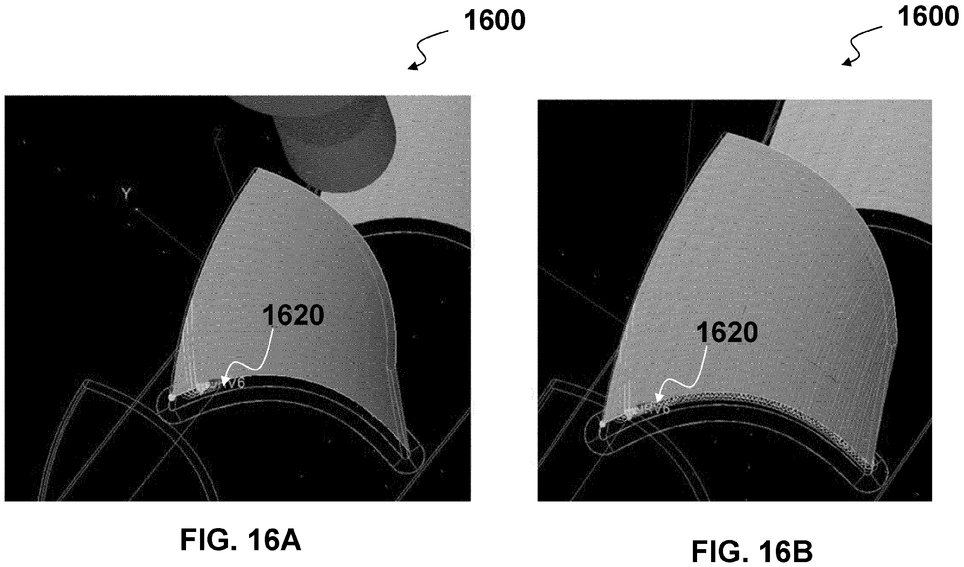

FIGS. 16A-16B are the natural completion of the developed flattest lines 1600 in the sense that they provide insight on the evolutionary nature of the algorithm. FIG. 16A shows the first flattest lines produced by the algorithm with "source-points" lying on the "base-curve" 1620; by comparing FIG. 16A and FIG. 16B (and also FIG. 15A with FIG. 15B and FIG. 15C) they illustrate how the source-points are sequentially produced along that base-curve 1620 and how, as a consequence, the entire surface area to be machined is progressively filled with flattest lines arising at each source-point; for the CAM-user experts this procedure clearly "mimics" the behavior of the rulings of a ruled surface for 5-axes flank-milling machining: finally, FIG. 16B shows the entirety of the flattest lines and how they represent a valuable (because of the differential-geometric information each of them carries) pattern covering the surface area to be machined.

These lines represent the closest representations to a ruled surface that may be extracted from the original surface. Each line corresponds to a path that may be used for flank milling operations on the surface. In conventional machining practices, a standard swarf cycle would reject the original yellow surface for not being exactly ruled; however, the flattest lines calculation method enables the generation of paths for effective machining of such surfaces.

Potential applications of the Flattest Lines method extend beyond subtractive manufacturing and include additive manufacturing processes. In the context of additive manufacturing, the Flattest Lines algorithm can provide a surrogate of extrusion directions for non-developable surfaces, offering valuable guidance for fabricating parts with complex geometric characteristics. Additionally, the Flattest Lines method enables the development of automatic procedures that suggest the best cutting tools for specific target parts. By predicting the optimal size of a barrel-cutter and optimizing factors such as scallop height and curvature matching, this automatic procedure eliminates the need for trial and error, thereby enhancing machining efficiency.

In the disclosed embodiments a slightly non-ruled target surface, the family of Flattest Lines represents a physical measure of how distant the target surface is from being exactly ruled and provides the optimal surrogate (with respect to physical distance measures) of the rulings, in the sense that Flattest Lines are the family of geometric entities closest to rulings that may be found on the target surface. Additionally, the disclosed methods and systems may improve the subtractive machinability of surfaces which are already exactly ruled when their parametrization is not aligned with the rulings. Overall, the Flattest Lines method offers significant advancements in both subtractive and additive manufacturing, delivering precise machining outcomes and expanding the scope of machinable shapes with complex geometric properties.

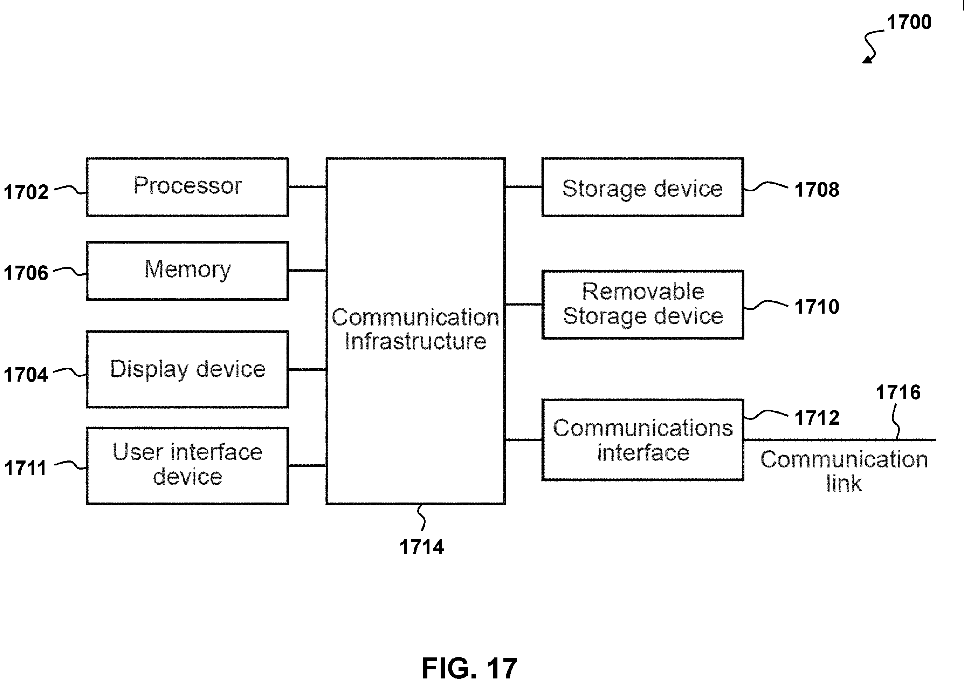

FIG. 17 is a high-level block diagram 1700 showing a computing system comprising a computer system useful for implementing an embodiment of the system and process, disclosed herein. Embodiments of the system may be implemented in different computing environments. The computer system includes one or more processors 1702, and can further include an electronic display device 1704 (e.g., for displaying graphics, text, and other data), a main memory 1706 (e.g., random access memory (RAM)), storage device 1708, a removable storage device 1710 (e.g., removable storage drive, a removable memory module, a magnetic tape drive, an optical disk drive, a computer readable medium having stored therein computer software and/or data), a user interface device 1711 (e.g., keyboard, touch screen, keypad, pointing device), and a communication interface 1712 (e.g., modem, a network interface (such as an Ethernet card), a communications port, or a PCMCIA slot and card). The communication interface 1712 allows software and data to be transferred between the computer system and external devices. The system further includes a communications infrastructure 1714 (e.g., a communications bus, crossover bar, or network) to which the aforementioned devices/modules are connected as shown.

Information transferred via communications interface 1712 may be in the form of signals such as electronic, electromagnetic, optical, or other signals capable of being received by communications interface 1712, via a communication link 1716 that carries signals and may be implemented using wire or cable, fiber optics, a phone line, a cellular/mobile phone link, an radio frequency (RF) link, and/or other communication channels. Computer program instructions representing the block diagram and/or flowcharts herein may be loaded onto a computer, programmable data processing apparatus, or processing devices to cause a series of operations performed thereon to produce a computer implemented process.

Embodiments have been described with reference to flowchart illustrations and/or block diagrams of methods, apparatus (systems) and computer program products according to embodiments. Each block of such illustrations/diagrams, or combinations thereof, can be implemented by computer program instructions. The computer program instructions when provided to a processor produce a machine, such that the instructions, which execute via the processor, create means for implementing the functions/operations specified in the flowchart and/or block diagram. Each block in the flowchart/block diagrams may represent a hardware and/or software module or logic, implementing embodiments. In alternative implementations, the functions noted in the blocks may occur out of the order noted in the figures, concurrently, etc.

Computer programs (i.e., computer control logic) are stored in main memory and/or secondary memory. Computer programs may also be received via a communications interface 1712. Such computer programs, when executed, enable the computer system to perform the features of the embodiments as discussed herein. In particular, the computer programs, when executed, enable the processor and/or multi-core processor to perform the features of the computer system. Such computer programs represent controllers of the computer system.

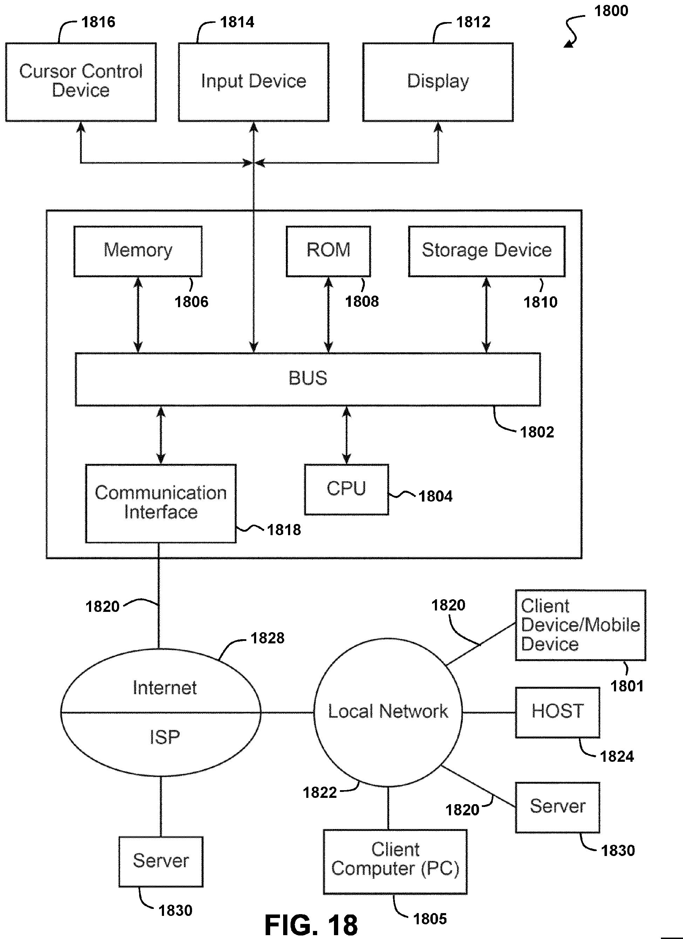

FIG. 18 shows a block diagram of an example system 1800 in which an embodiment may be implemented. The system 1800 includes one or more client devices 1801 such as consumer electronics devices, connected to one or more server computing systems 1830. A server 1830 includes a bus 1802 or other communication mechanism for communicating information, and a processor (CPU) 1804 coupled with the bus 1802 for processing information. The server 1830 also includes a main memory 1806, such as a random access memory (RAM) or other dynamic storage device, coupled to the bus 1802 for storing information and instructions to be executed by the processor 1804. The main memory 1806 also may be used for storing temporary variables or other intermediate information during execution or instructions to be executed by the processor 1804. The server computer system 1830 further includes a read only memory (ROM) 1808 or other static storage device coupled to the bus 1802 for storing static information and instructions for the processor 1804. A storage device 1810, such as a magnetic disk or optical disk, is provided and coupled to the bus 1802 for storing information and instructions. The bus 1802 may contain, for example, thirty-two address lines for addressing video memory or main memory 1806. The bus 1802 can also include, for example, a 32-bit data bus for transferring data between and among the components, such as the CPU 1804, the main memory 1806, video memory and the storage 1810. Alternatively, multiplex data/address lines may be used instead of separate data and address lines.

The server 1830 may be coupled via the bus 1802 to a display 1812 for displaying information to a computer user. An input device 1814, including alphanumeric and other keys, is coupled to the bus 1802 for communicating information and command selections to the processor 1804. Another type or user input device comprises cursor control 1816, such as a mouse, a trackball, or cursor direction keys for communicating direction information and command selections to the processor 1804 and for controlling cursor movement on the display 1812.

According to one embodiment, the functions are performed by the processor 1804 executing one or more sequences of one or more instructions contained in the main memory 1806. Such instructions may be read into the main memory 1806 from another computer-readable medium, such as the storage device 1810. Execution of the sequences of instructions contained in the main memory 1806 causes the processor 1804 to perform the process steps described herein. One or more processors in a multi-processing arrangement may also be employed to execute the sequences of instructions contained in the main memory 1806. In alternative embodiments, hard-wired circuitry may be used in place of or in combination with software instructions to implement the embodiments. Thus, embodiments are not limited to any specific combination of hardware circuitry and software.

The terms "computer program medium," "computer usable medium," "computer readable medium", and "computer program product," are used to generally refer to media such as main memory, secondary memory, removable storage drive, a hard disk installed in hard disk drive, and signals. These computer program products are means for providing software to the computer system. The computer readable medium allows the computer system to read data, instructions, messages or message packets, and other computer readable information from the computer readable medium. The computer readable medium, for example, may include non-volatile memory, such as a floppy disk, ROM, flash memory, disk drive memory, a CD-ROM, and other permanent storage. It is useful, for example, for transporting information, such as data and computer instructions, between computer systems. Furthermore, the computer readable medium may comprise computer readable information in a transitory state medium such as a network link and/or a network interface, including a wired network or a wireless network that allow a computer to read such computer readable information. Computer programs (also called computer control logic) are stored in main memory and/or secondary memory. Computer programs may also be received via a communications interface. Such computer programs, when executed, enable the computer system to perform the features of the embodiments as discussed herein. In particular, the computer programs, when executed, enable the processor, which may be a multi-core processor to perform the features of the computer system. Accordingly, such computer programs represent controllers of the computer system.

Generally, the term "computer-readable medium" as used herein refers to any medium that participated in providing instructions to the processor 1804 for execution. Such a medium may take many forms, including but not limited to, non-volatile media, volatile media, and transmission media. Non-volatile media includes, for example, optical or magnetic disks, such as the storage device 1810. Volatile media includes dynamic memory, such as the main memory 1806. Transmission media includes coaxial cables, copper wire and fiber optics, including the wires that comprise the bus 1802. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, an EPROM, a FLASH-EPROM, any other memory chip or cartridge, a carrier wave as described hereinafter, or any other medium from which a computer can read.

Various forms of computer readable media may be involved in carrying one or more sequences of one or more instructions to the processor 1804 for execution. For example, the instructions may initially be carried on a magnetic disk of a remote computer. The remote computer can load the instructions into its dynamic memory and send the instructions over a telephone line using a modem. A modem local to the server 1830 can receive the data on the telephone line and use an infrared transmitter to convert the data to an infrared signal. An infrared detector coupled to the bus 1802 can receive the data carried in the infrared signal and place the data on the bus 1802. The bus 1802 carries the data to the main memory 1806, from which the processor 1804 retrieves and executes the instructions. The instructions received from the main memory 1806 may optionally be stored on the storage device 1810 either before or after execution by the processor 1804.

The server 1830 also includes a communication interface 1818 coupled to the bus 1802. The communication interface 1818 provides a two-way data communication coupling to a network link 1820 that is connected to the worldwide packet data communication network now commonly referred to as the Internet 1828. The Internet 1828 uses electrical, electromagnetic, or optical signals that carry digital data streams. The signals through the various networks and the signals on the network link 1820 and through the communication interface 1818, which carry the digital data to and from the server 1830, are exemplary forms or carrier waves transporting the information.

In another embodiment of the server 1830, communication interface 1818 is connected to a network 1822 via a communication link 1820. For example, the communication interface 1818 may be an integrated services digital network (ISDN) card or a modem to provide a data communication connection to a corresponding type of telephone line, which can comprise part of the network link 1820. As another example, the communication interface 1818 may be a local area network (LAN) card to provide a data communication connection to a compatible LAN. Wireless links may also be implemented. In any such implementation, the communication interface 1818 sends and receives electrical electromagnetic or optical signals that carry digital data streams representing various types of information.

The network link 1820 typically provides data communication through one or more networks to other data devices. For example, the network link 1820 may provide a connection through the local network 1822 to a host computer 1824 or to data equipment operated by an Internet Service Provider (ISP). The ISP in turn provides data communication services through the Internet 1828. The local network 1822 and the Internet 1828 both use electrical, electromagnetic, or optical signals that carry digital data streams. The signals through the various networks and the signals on the network link 1820 and through the communication interface 1818, which carry the digital data to and from the server 1830, are exemplary forms or carrier waves transporting the information.

The server 1830 can send/receive messages and data, including e-mail, program code, through the network, the network link 1820 and the communication interface 1818. Further, the communication interface 1818 can comprise a USB/Tuner and the network link 1820 may be an antenna or cable for connecting the server 1830 to a cable provider, satellite provider or other terrestrial transmission system for receiving messages, data, and program code from another source.

The example versions of the embodiments described herein may be implemented as logical operations in a distributed processing system such as the system 1800 including the servers 1830. The logical operations of the embodiments may be implemented as a sequence of steps executing in the server 1830, and as interconnected machine modules within the system 1800. The implementation is a matter of choice and can depend on performance of the system 1800 implementing the embodiments. As such, the logical operations constituting said example versions of the embodiments are referred to for e.g., as operations, steps, or modules.

Similar to a server 1830 described above, a client device 1801 can include a processor, memory, storage device, display, input device and communication interface (e.g., e-mail interface) for connecting the client device to the Internet 1828, the ISP, or LAN 1822, for communication with the servers 1830.

The system 1800 can further include computers (e.g., personal computers, computing nodes) 1805 operating in the same manner as client devices 1801, where a user can utilize one or more computers 1805 to manage data in the server 1830.

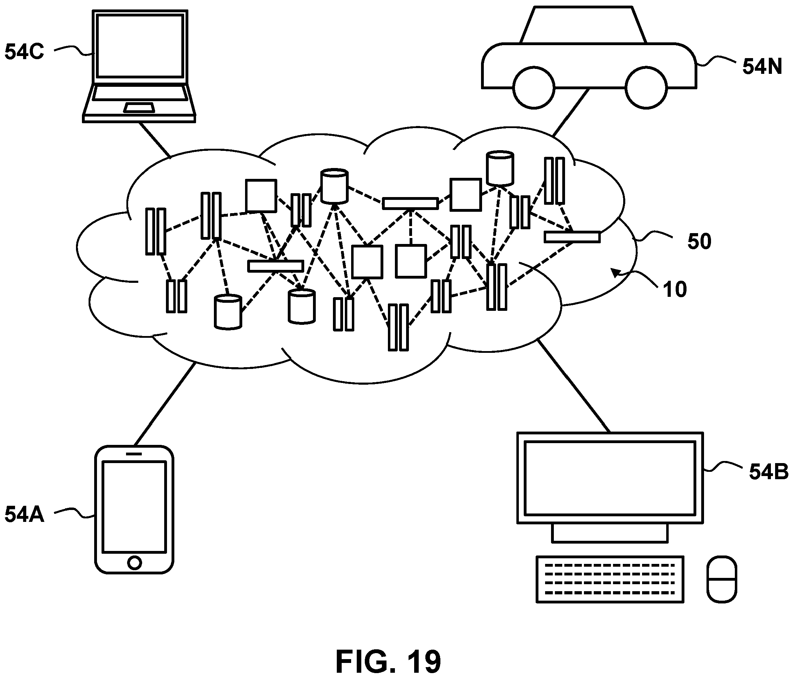

Referring now to FIG. 19, illustrative cloud computing environment 50 is depicted. As shown, cloud computing environment 50 comprises one or more cloud computing nodes 10 with which local computing devices used by cloud consumers, such as, for example, personal digital assistant (PDA), smartphone, smart watch, set-top box, video game system, tablet, mobile computing device, or cellular telephone 54A, desktop computer 54B, laptop computer 54C, and/or automobile computer system 54N may communicate. Nodes 10 may communicate with one another. They may be grouped (not shown) physically or virtually, in one or more networks, such as Private, Community, Public, or Hybrid clouds as described hereinabove, or a combination thereof. This allows cloud computing environment 50 to offer infrastructure, platforms and/or software as services for which a cloud consumer does not need to maintain resources on a local computing device. It is understood that the types of computing devices 54A-N shown in FIG. 19 are intended to be illustrative only and that computing nodes 10 and cloud computing environment 50 can communicate with any type of computerized device over any type of network and/or network addressable connection (e.g., using a web browser).

It is contemplated that various combinations and/or sub-combinations of the specific features and aspects of the above embodiments may be made and still fall within the scope of the invention. Accordingly, it should be understood that various features and aspects of the disclosed embodiments may be combined with or substituted for one another in order to form varying modes of the disclosed invention. Further, it is intended that the scope of the present invention is herein disclosed by way of examples and should not be limited by the particular disclosed embodiments described above.

## Claims

1. A method comprising:
selecting a workpiece to be machined, wherein the workpiece has a set of one or more unruled surfaces;
determining sub-areas of the set of one or more unruled surfaces having a set of curves wherein the set of curves have pseudo-ruledness properties, wherein pseudo-ruledness properties are a set of properties associated with the surface and determined based on evaluating the Gaussian curvature of the set of curves and a set of criteria;
determining a direction for each curve of the set of curves of the determined sub-areas, wherein the direction minimizes an absolute value of a normal curvature for the set of curves and correspond to isolines on the determined sub-areas that exhibit near-zero curvature;
identifying a subset of curves having near-zero curvature from the set of curves determined to have direction minimizing an absolute value of a normal curvature, the identifying based on whether the determined direction is negative, zero, or positive within a threshold;
selecting a flank milling cutting tool from a set of available tools based on matching the curvature of the identified subset of curves with curvature of the flank milling cutting tool; and
determining a tool path for the flank milling cutting tool based on the selected flank milling cutting tool having a tool curvature and the curvature of the identified subset of curves.

2. The method of claim 1, wherein the set of criteria is based on identifying the sub-areas to be at least one of: surface that is not exact-ruled and surface that is not far from being a ruled surface.

3. The method of claim 1 or 2, further comprising:
inspecting the set of one or more unruled surfaces for pseudo-ruledness properties.

4. The method of any one of claims 1 to 3, further comprising:
validating the determined tool path for the flank milling cutting tool to ensure that the tool path is free of collisions and tolerance-exceeding interferences with the surface.

5. The method of any one of claims 1 to 4, wherein the direction is slightly varying point by point and determined via stepping in the calculated directions, wherein at each step the curvature is again examined to be at least one of: non-positive and positive not exceeding a prescribed positive physical threshold.

6. The method of any one of claims 1 to 5, wherein the threshold is based on a machining tolerance, wherein the tolerance is based on machining capabilities of the machine wherein the machine is not capable of flank milling past the threshold.

7. The method of claim 6, wherein threshold is adjusted based on a flank milling stage, wherein the stage is at least one of: during roughing, semi-finishing, and finishing stages.

8. The method of any one of claims 1 to 7, wherein matching the curvature of the identified subset of curves with curvature of the flank milling cutting tool ensures that the selected tool efficiently machines the surface while minimizing deviations from the desired curvature profile.

9. The method of any one of claims 1 to 8, further comprising:
outputting the determined tool path for the flank milling cutting tool as one or more machine instructions.

10. The method of claim 9, wherein determining a tool path for the flank milling cutting tool is further based on following the near-zero curvature isolines.

11. A device for generating instructions for a five-axis machining tool, the device having a processor and addressable memory, the processor configured to:
select a workpiece to be machined, wherein the workpiece has a set of one or more unruled surfaces;
determine sub-areas of the set of one or more unruled surfaces having a set of curves wherein the set of curves have pseudo-ruledness properties, wherein pseudo-ruledness properties are a set of properties associated with the surface and determined based on an evaluation of the Gaussian curvature of the set of curves and a set of criteria;
determine a direction for each curve of the set of curves of the determined sub-areas, wherein the direction minimizes an absolute value of a normal curvature for the set of curves and correspond to isolines on the determined sub-areas that exhibit near-zero curvature;
identify a subset of curves having near-zero curvature from the set of curves determined to have direction that minimizes an absolute value of a normal curvature, and configured to identify based on whether the determined direction is negative, zero, or positive within a threshold;
select a flank milling cutting tool from a set of available tools based on matching the curvature of the identified subset of curves with curvature of the flank milling cutting tool; and
determine a tool path for the flank milling cutting tool based on the selected flank milling cutting tool having a tool curvature and the curvature of the identified subset of curves.

12. The device of claim 11, wherein the threshold is based on a machining tolerance, wherein the tolerance is based on machining capabilities of the machine wherein the machine is not capable of flank milling past the threshold.

13. The device of claim 11 or 12, wherein matching the curvature of the identified subset of curves with curvature of the flank milling cutting tool ensures that the selected tool efficiently machines the surface while minimizing deviations from the desired curvature profile.

14. The device of any one of claims 11 to 13, wherein the processor is further configured to:
validate the determined tool path for the flank milling cutting tool to ensure that the tool path is free of collisions and tolerance-exceeding interferences with the surface.

15. The device of any one of claims 11 to 14, wherein the flank milling cutting tool is a barrel cutting tool.
